# EUROPEAN PATENT SPECIFICATION

(11) **EP 2 713 576 B1**
(45) Date of publication and mention of the grant of the patent: **13.12.2017**
(21) Application number: 12801804.1
(22) Date of filing: 20.06.2012
(51) Int. Cl.: H04L 29/06, H04L 29/08

(54) **METHOD AND DEVICE FOR PROCESSING STREAMING MEDIA CONTENT**
VERFAHREN UND VORRICHTUNG ZUR VERARBEITUNG VON STREAMINGMEDIEN-INHALTEN
SYSTÈME ET PROCÉDÉ POUR TRAITER UN CONTENU MULTIMÉDIA EN TEMPS RÉEL

(30) Priority: 20.06.2011 CN 201110165862
(43) Date of publication of application: 02.04.2014
(73) Proprietor: Huawei Technologies Co., Ltd., Longgang District Shenzhen, Guangdong 518129 (CN)
(72) Inventor: BI, Xiaoyu, Shenzhen Guangdong 518129 (CN); WEI, Anni, Shenzhen Guangdong 518129 (CN); CUI, Yang, Shenzhen Guangdong 518129 (CN)
(74) Representative: Gill Jennings & Every LLP
(86) International application number: PCT/CN2012/077244
(87) International publication number: WO 2012/175021

(56) References cited:
- WO-A2-2010/078281
- WO-A2-2011/038013
- AU-B1- 2010 202 741
- CN-A- 1 484 924
- CN-A- 101 072 340
- CN-A- 102 075 913
- US-A1- 2004 093 419
- US-A1- 2011 082 924
- US-A1- 2011 119 395
- FECHEYR-LIPPENS A: "A Review of HTTP Live Streaming", INTERNET CITATION, 25 January 2010 (2010-01-25), pages 1-37, XP002638990, Retrieved from the Internet: URL:http://issuu.com/andruby/docs/http_liv e_streaming [retrieved on 2011-05-24]
- THOMAS STOCKHAMMER: "Dynamic Adaptive Streaming over HTTP Design Principles and Standards", SECOND W3C WEB AND TV WORKSHOP, , 22 January 2011 (2011-01-22), pages 1-3, XP007916969, Retrieved from the Internet: URL:http://www.w3.org/2010/11/web-and-tv/p apers.html [retrieved on 2011-02-02]
- "3rd Generation Partnership Project; Technical Specification Group Services and System Aspects; Transparent end-to-end Packet-switched Streaming Service (PSS); Progressive Download and Dynamic Adaptive Streaming over HTTP (3GP-DASH) (Release 10)", 3GPP STANDARD; 3GPP TS 26.247, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. V10.0.0, 17 June 2011 (2011-06-17), pages 1-94, XP050553206, [retrieved on 2011-06-17]

## Description

### CROSS-REFERENCE TO RELATED APPLICATION

This application claims priority to Chinese Patent Application No. 201110165862.6, filed with the Chinese Patent Office on June 20, 2011 and entitled "METHOD AND DEVICE FOR PROCESSING STREAMING MEDIA CONTENT".

### TECHNICAL FIELD

Embodiments of the present invention relate to streaming media technologies, and in particular, to a method and a device for processing streaming media content.

### BACKGROUND

Streaming media refer to media that release multi-streaming media content of audios and videos by means of data streams in the Internet. A streaming media technology refers to a technology for releasing multi-media data streams in an IP network. The technology mainly adopts a streaming transmission mode to compress and encode an entire multi-media file into multiple compressed packages and transfer the compressed packages to a client sequentially in real time, so that a user can decompress and play the compressed packages that have been transferred before, while downloading subsequent compressed packages, thereby saving time.

A hyper text transfer protocol (Hyper Text Transfer Protocol; HTTP for short) streaming (Streaming) server (Server) mainly adopts a plaintext to transfer a media presentation description (Media Presentation Description; MPD for short), which greatly risks the security, integrity and user privacy of the MPD. However, if the MPD is transferred in an encryption manner, some valid third party devices cannot perform valid operations on the MPD, thereby preventing the HTTP Streaming Server from using the MPD effectively.

Andrew Fecheyr-Lippens "A Review of HTTP Live Streaming" (January 2010) compares a number of approaches to media streaming.

PCT Application Publication number 2010/078281 A2 describes an approach to HTTP live streaming.

United States patent application publication number 2011/0082924 A1 describes techniques for allowing adaptive bit rate streaming.

United States patent application publication number 2004/0093419 A1 describes a method for delivering content using SSL.

Thomas Stockhammer "Dynamic Adaptive Streaming over HTTP - Design Principles and Standards" in Proceedings of the Second Annual ACM Conference on Multimedia Systems pp 133-144 (2011) provides an overview of the development of DASH.

### SUMMARY

The present invention provides a method and a device for processing streaming media content, so as to ensure the integrity, security and high privacy of an MPD.

This object is solved by the methods having the features of claims 1 and 5, by an HTTP streaming server having the features of claim 8 and by a third party device having the features of claim 11. Advantageous embodiments thereof are defined in the respective dependent claims.

In one aspect, a method for processing streaming media content is provided, including:
receiving, by a hyper text transfer protocol streaming server, an authentication request sent by a third party device, performing authentication on the third party device according to the authentication request, and if the authentication is successful, sending an authentication response indicating that the authentication is successful to the third party device;
receiving, by the hyper text transfer protocol streaming server from the third party device, a first identifier and content that corresponds to the first identifier, and processing the media presentation description corresponding to the first identifier according to the content, wherein the first identifier is an identifier of a media presentation description; and
performing, by the hyper text transfer protocol streaming server, encryption the processed media presentation description, and sending the media presentation description that has undergone the encryption to a client, causing the client to obtain and play streaming media content corresponding to the media presentation description that has undergone the encryption.

In one aspect, another method for processing media content is provided, including:
obtaining, by a third party device, a request message of a media presentation description, wherein the request message is sent by a client, wherein the request message of the media presentation description comprises a first identifier and the first identifier is an identifier of the media presentation description;
sending, by the third party device, an authentication request to a hyper text transfer protocol streaming server according to the request message of the media presentation description, and receiving an authentication response returned by the hyper text transfer protocol streaming server; and
sending, by the third party device, if the received authentication response is a response indicating that the authentication is successful, the first identifier and content that corresponds to the first identifier to the hyper text transfer protocol streaming server causing the hyper text transfer protocol streaming server to process the media presentation description corresponding to the first identifier according to the content, perform encryption on the processed media presentation description, and send the media presentation description that has undergone the encryption to the client.

In one aspect, an HTTP Streaming Server is provided, including:
a first transceiver module, adapted to receive an authentication request sent by a third party device;
a first authentication module, adapted to perform authentication on the third party device according to the authentication request received by the first transceiver module, wherein
the first transceiver module is adapted to: when the authentication of the first authentication module is successful, send an authentication response indicating that the authentication is successful to the third party device, and receive a first identifier and content that corresponds to the first identifier, wherein the first identifier is an identifier of a media presentation description; and
a first processing module, adapted to process the media presentation description corresponding to the first identifier according to the first identifier and the content that corresponds to the first identifier, the first identifier and the content being received by the first transceiver module, wherein
the first transceiver module is adapted to perform encryption on the media presentation description processed by the first processing module, and send the media presentation description that has undergone the encryption to a client.

In one aspect, a third party device is provided, including:
a saving module, adapted to save content that; and
a transceiver module, adapted to obtain a request message of a media presentation description that is sent by a client, wherein the request message of the media presentation description comprises a first identifier and the first identifier is an identifier of the media presentation description; send an authentication request to a hyper text transfer protocol streaming server according to the request message of the media presentation description, and receive an authentication response returned by the hyper text transfer protocol streaming server; and if the received authentication response is a response indicating that the authentication is successful, send the first identifier and the content that, saved by the saving module, and corresponding to the first identifier to the hyper text transfer protocol streaming server, causing the hyper text transfer protocol streaming server to process the media presentation description corresponding to the first identifier according to the content, perform encryption on the processed media presentation description, and send the media presentation description that has undergone the encryption to the client.

According to the method and the device for processing streaming media content according to the embodiments of the present invention, an HTTP Streaming Server receives an authentication request sent by a third party device, performs authentication on the third party device according to the authentication request, and if the authentication is successful, sends an authentication response indicating that the authentication is successful to the third party device, so as to trigger the third party device to send a first identifier and content that needs to be processed by the third party device and corresponds to the first identifier; processes an MPD corresponding to the first identifier according to the content that needs to be processed by the third party device; performs security processing on the processed MPD; and finally sends the MPD that has undergone the security processing to a client, so that the client obtains and plays streaming media content corresponding to the MPD that has undergone the security processing, thereby ensuring the integrity, security and high privacy of the MPD.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic architecture diagram of an HTTP Streaming system in the prior art;
FIG. 2 is a flowchart of an embodiment of a method for processing streaming media content according to the present invention;
FIG. 3 is a flowchart of another embodiment of a method for processing streaming media content according to the present invention;
FIG. 4 is a schematic structural diagram of system networking for processing streaming media content in a system for processing streaming media content;
FIG. 5 is a signaling flowchart of another embodiment of a method for processing streaming media content according to the present invention;
FIG. 6 is a signaling flowchart of another embodiment of a method for processing streaming media content according to the present invention;
FIG. 7 is a flowchart of another embodiment of a method for processing streaming media content according to the present invention;
FIG. 8 is a flowchart of another embodiment of a method for processing streaming media content according to the present invention;
FIG. 9 is a signaling flowchart of another embodiment of a method for processing streaming media content according to the present invention;
FIG. 10 is a signaling flowchart of another embodiment of a method for processing streaming media content according to the present invention;
FIG. 11 is a signaling flowchart of another embodiment of a method for processing streaming media content according to the present invention;
FIG. 12 is a schematic structural diagram of an embodiment of an HTTP Streaming Server according to the present invention;
FIG. 13 is a schematic structural diagram of another embodiment of an HTTP Streaming Server according to the present invention;
FIG. 14 is a schematic structural diagram of an embodiment of a third party device according to the present invention;
FIG. 15 is a schematic structural diagram of another embodiment of a third party device according to the present invention;
FIG. 16 is a schematic structural diagram of another embodiment of a third party device according to the present invention;
FIG. 17 is a schematic structural diagram of another embodiment of a third party device according to the present invention;
FIG. 18 is a schematic structural diagram of another embodiment of a third party device according to the present invention; and
FIG. 19 is a schematic structural diagram of an embodiment of an HTTP Streaming Server according to the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

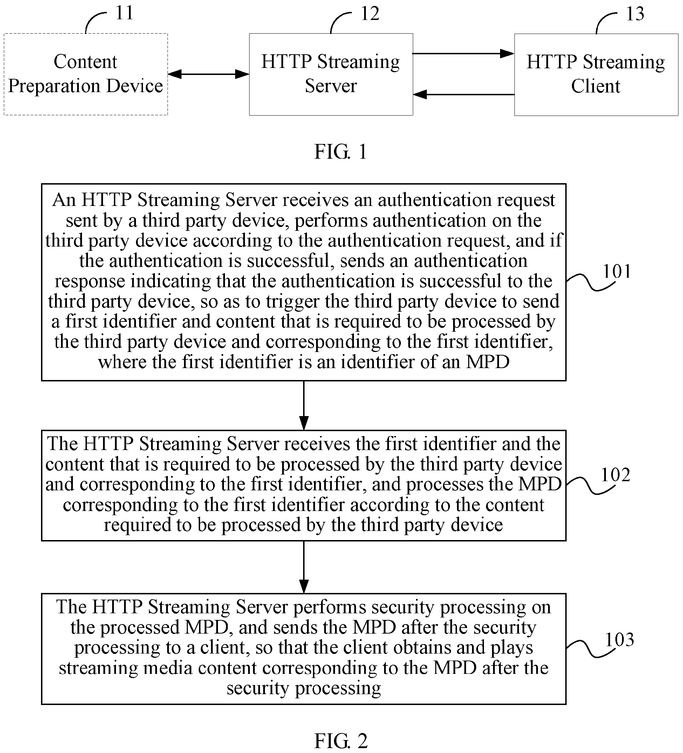

A conventional streaming media transmission technology is mainly used for transmitting real-time streaming media, such as audio streams, video streams and subtitle streams, by using a real-time transport protocol (Real-time Transport Protocol; RTP for short) or an RTP control protocol (RTP Control Protocol; RTCP for short), and may perform streaming control operations, such as play, pause, fast forward, rewind and stop, on the streaming media by using a real time streaming protocol (Real Time Streaming Protocol; RTSP for short). HTTP Streaming is different from conventional streaming media transmission, and a multi-code rate is mainly added for a terminal to select according to an actual condition. A piece of streaming media content is divided into fragments with different code rates at a media server side. According to a request of a terminal device, the media server transmits multi-streaming media content of the fragments with different code rates to the terminal device to play. Specifically, FIG. 1 is a schematic architecture diagram of an HTTP Streaming system in the prior art. As shown in FIG. 1, the HTTP Streaming system mainly includes: a content preparation (Content Preparation) device 11, an HTTP Streaming server (Server) 12 and an HTTP Streaming client (Client) 13. The working principle of the HTTP Streaming system mainly is that: a content source (Content Source) inputs streaming media content into the Content Preparation device 11, and the Content Preparation device 11 fragments the streaming media content, encapsulates obtained fragment content into a format conforming to requirements, generates a media presentation description MPD corresponding to the fragment content, and releases the fragment content and the MPD into the HTTP Streaming Server 12. When the HTTP Streaming Client 13 requests for an MPD, the HTTP Streaming Client 13 sends a request to obtain the MPD from the HTTP Streaming Server 12, generates fragment request information according to the MPD, and sends the fragment request information to the HTTP Streaming Server 12, so that the HTTP Streaming Server 12 delivers fragment content corresponding to the MPD according to the fragment request information, and finally the HTTP Streaming Client 13 plays the fragment content. In addition, the third party device (for example, an operator) may also intercept the MPD, perform operations on the intercepted MPD (for example, inserting an advertisement or modifying the original advertisement), and send the modified MPD to the HTTP Streaming Client 13 for the HTTP Streaming Client 13 to play.

FIG. 2 is a flowchart of an embodiment of a method for processing streaming media content according to the present invention. As shown in FIG. 2, the method of this embodiment includes:
Step 101: An HTTP Streaming Server receives an authentication request sent by a third party device, performs authentication on the third party device according to the authentication request, and if the authentication is successful, sends an authentication response indicating that the authentication is successful to the third party device, so as to trigger the third party device to send a first identifier and content that needs to be processed by the third party and corresponds to the first identifier, where the first identifier is an identifier of an MPD.
   In this embodiment, an HTTP Streaming Client obtains a uniform/universal resource locator (Uniform/Universal Resource Locator; URL for short) of the MPD in an out-of-band manner, sends a request message of the MPD to the HTTP Streaming Server according to the URL of the MPD, and when an intermediate node (Middle Box) of the third party device intercepts the request message of the MPD, sends the authentication request to the HTTP Streaming Server. If the authentication is successful, the HTTP Streaming Server sends the authentication response indicating that the authentication is successful to the third party device, so as to trigger the third party device to send the first identifier and the content that needs to be processed by the third party and corresponds to the first identifier, where the first identifier is an identifier of the MPD, and may specifically be a serial number of the MPD or a sequence number of a video. The third party device may be a radio controller (Radio Network Controller; RNC for short) of a base station, an evolved base station (evolved Node B; eNB for short) or a core network node.
Step 102: The HTTP Streaming Server receives the first identifier and the content that needs to be processed by the third party device and corresponds to the first identifier, and processes an MPD corresponding to the first identifier according to the content that needs to be processed by the third party device.
   In this embodiment, when the authentication of the HTTP Streaming Server on the third party device according to the authentication request is successful, that is, when the third party device is valid, the HTTP Streaming Server may send the authentication response indicating that the authentication is successful to the third party device; after receiving the authentication response indicating that the authentication is successful, the third party device sends the first identifier and the content that needs to be processed by the third party device and corresponds to the first identifier to the HTTP Streaming Server; and the HTTP Streaming Server processes the MPD corresponding to the first identifier according to the content that needs to be processed by the third party device, where the content to be processed may be advertisement information that needs to be modified, deleted and/or added.
Step 103: The HTTP Streaming Server performs security processing on the processed MPD, and sends the MPD that has undergone the security processing to a client, so that the client obtains and plays streaming media content corresponding to the MPD that has undergone the security processing.

Specifically, the client may specifically be an HTTP Streaming Client.

In this embodiment, after processing the MPD, the HTTP Streaming Server performs security processing on the processed MPD, for example, encrypting the processed MPD by using a key, and sending the encrypted MPD to the HTTP Streaming Client, so that the HTTP Streaming Client obtains, from the HTTP Streaming Server, and plays streaming media content corresponding to the encrypted MPD.

In this embodiment, an HTTP Streaming Server receives an authentication request sent by a third party device, performs authentication on the third party device according to the authentication request, and if the authentication is successful, sends an authentication response indicating that the authentication is successful to the third party device, so as to trigger the third party device to send a first identifier and content that needs to be processed by the third party device and corresponds to the first identifier; processes an MPD corresponding to the first identifier according to the content that needs to be processed by the third party device; performs security processing on the processed MPD; and finally sends the MPD that has undergone the security processing to a client, so that the client obtains and plays streaming media content corresponding to the MPD that has undergone the security processing, thereby ensuring the integrity, security and high privacy of the MPD.

Furthermore, in another embodiment of the present invention, on the basis of the embodiment shown in FIG. 2, a specific implementation manner for the HTTP Streaming Server to receive an authentication request sent by a third party device, perform authentication on the third party device according to the authentication request, and if the authentication is successful, send an authentication response indicating that the authentication is successful to the third party device in step 101 is:
receiving, by the HTTP Streaming Server, the authentication request sent by the third party device, performing authentication on the third party device according to the authentication request, and if the authentication is successful, establishing a security tunnel with the third party device, and sending the authentication response indicating that the authentication is successful to the third party device through the security tunnel.

A specific implementation manner for the HTTP Streaming Server to receive the first identifier and the content that needs to be processed by the third party device and corresponds to the first identifier in step 102 is:
receiving, by the HTTP Streaming Server, the first identifier and the content that needs to be processed by the third party device and corresponds to the first identifier, where the first identifier and the content are sent by the third party device through the security tunnel.

In addition, a specific implementation manner for the HTTP Streaming Server to perform security processing on the processed MPD, and send the MPD that has undergone the security processing to a client in step 103 is:
encrypting, by the HTTP Streaming Server, the processed MPD according to a pre-configured key, and sending the encrypted MPD to the client.

Alternatively, another specific implementation manner for the HTTP Streaming Server to perform security processing on the processed MPD, and send the MPD that has undergone the security processing to a client in step 103 is:
sending, by the HTTP Streaming Server, the processed MPD to the client through an Internet protocol security (Internet Protocol Security; IPsec for short) tunnel established between the HTTP Streaming Server and the client.

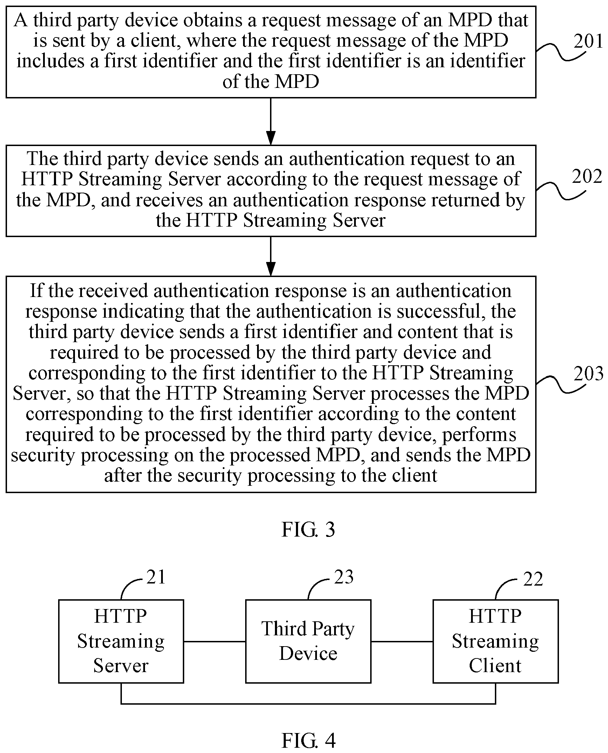

FIG. 3 is a flowchart of another embodiment of a method for processing streaming media content according to the present invention. As shown in FIG. 3, the method of this embodiment includes:
Step 201: A third party device obtains a request message of an MPD that is sent by a client, where the request message of the MPD includes a first identifier and the first identifier is an identifier of the MPD.
Step 202: The third party device sends an authentication request to an HTTP Streaming Server according to the request message of the MPD, and receives an authentication response returned by the HTTP Streaming Server.
Step 203: If the received authentication response is an authentication response indicating that the authentication is successful, the third party device sends a first identifier and content that needs to be processed by the third party device and corresponds to the first identifier to the HTTP Streaming Server, so that the HTTP Streaming Server processes the MPD corresponding to the first identifier according to the content that needs to be processed by the third party device, performs security processing on the processed MPD, and sends the MPD that has undergone the security processing to the client.

Specifically, the HTTP Streaming Server may perform the technical solution of the method embodiment shown in FIG. 2, and the implementation principle is similar, which will not be described herein again.

In this embodiment, a third party device obtains a request message of an MPD that is sent by a client, where the request message of the MPD includes a first identifier and the first identifier is an identifier of the MPD, sends an authentication request to an HTTP Streaming Server according to the request message of the MPD, receives an authentication response returned by the HTTP Streaming Server, and if the authentication response received by the third party device is an authentication response indicating that the authentication is successful, sends the first identifier and content that needs to be processed by the third party device and corresponds to the first identifier to the HTTP Streaming Server, so that the HTTP Streaming Server processes the MPD corresponding to the first identifier according to the content that needs to be processed by the third party device, performs security processing on the processed MPD, and sends the MPD that has undergone the security processing to a client, thereby ensuring the security and integrity of the MPD.

Furthermore, in another embodiment of the present invention, on the basis of the embodiment shown in FIG. 3, a specific implementation manner of step 202 is:
sending, by the third party device, the authentication request to the HTTP Streaming Server according to the request message of the MPD; and
if the authentication on the third party device is successful, establishing, by the third party device, a security tunnel with the HTTP Streaming Server, and receiving the authentication response indicating that the authentication is successful through the security tunnel.

A specific implementation manner for the third party device, if the received authentication response is an authentication response indicating that the authentication is successful, to send a first identifier and content that needs to be processed by the third party device and corresponds to the first identifier to the HTTP Streaming Server in step 203 may be:
receiving, by the third party device, the authentication response indicating that the authentication is successful through the security tunnel, and sending, by the third party device, the first identifier and the content that needs to be processed by the third party device and corresponds to the first identifier to the HTTP Streaming Server through the security tunnel.

The implementation environment of each embodiment of the present invention may specifically be in a system for processing streaming media content. FIG. 4 is a schematic structural diagram of system networking for processing streaming media content in a system for processing streaming media content. As shown in FIG. 4, the system for processing streaming media content mainly includes: an HTTP Streaming Server 21, an HTTP Streaming Client 22 and a third party device 23.

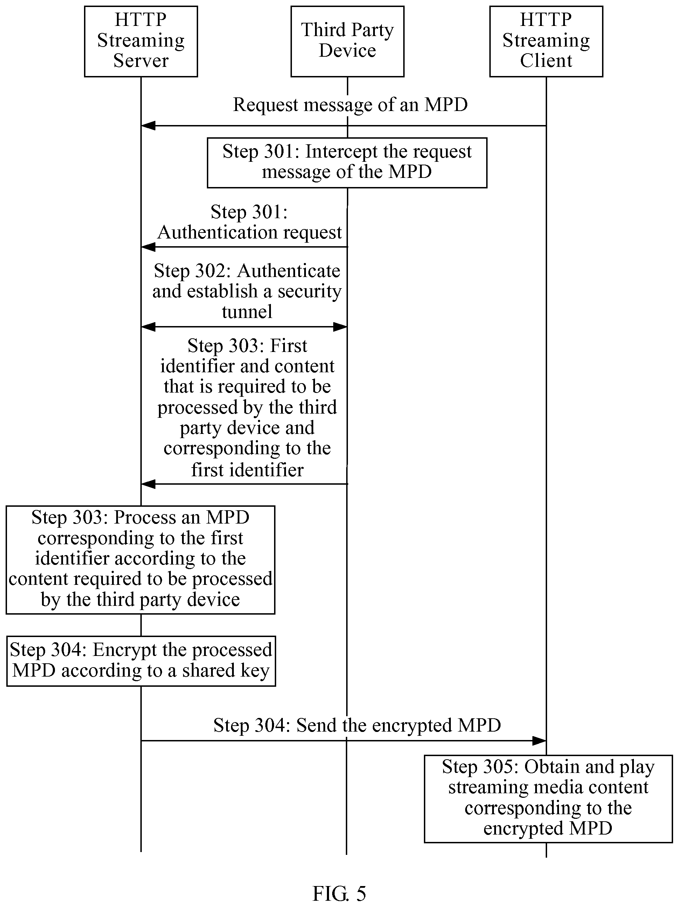

FIG. 5 is a signaling flowchart of another embodiment of a method for processing streaming media content according to the present invention. As shown in FIG. 5, in this embodiment, on the basis of the embodiment shown in FIG. 4, a system for processing streaming media content may be based on a shared key mechanism, that is, a shared key may be pre-configured between the HTTP Streaming Server and the HTTP Streaming Client or a shared key may be generated in a certain manner. For example, if a shared key is negotiated and generated in an authentication manner, and the authentication manner may include a secure sockets layer (Secure Sockets Layer; SSL for short) or transport layer security (Transport Layer Security; TLS for short), the method of this embodiment includes:
Step 301: A third party device intercepts a request message of an MPD that is sent by an HTTP Streaming Client, and sends an authentication request to an HTTP Streaming Server.
Step 302: The HTTP Streaming Server performs authentication on the third party device according to the received authentication request, and if the authentication is successful, establishes a security tunnel with the third party device, and sends an authentication response indicating that the authentication is successful to the third party device through the security tunnel, so as to trigger the third party device to send a first identifier and content that needs to be processed by the third party device and corresponds to the first identifier through the security tunnel.
Step 303: The HTTP Streaming Server receives the first identifier and the content that needs to be processed by the third party device and corresponds to the first identifier, where the first identifier and the content are sent by the third party device through the security tunnel, and processes an MPD corresponding to the first identifier according to the content that needs to be processed by the third party device.
   In this embodiment, the content that needs to be processed by the third party device may include content required to be modified, added and/or deleted by the third party device, and the content may be advertisement information.
Step 304: The HTTP Streaming Server encrypts the processed MPD according to a pre-configured key (for example, a shared key), and sends the encrypted MPD to the HTTP Streaming Client.
Step 305: The HTTP Streaming Client obtains and plays streaming media content corresponding to the encrypted MPD.

Specifically, in this embodiment, when receiving the encrypted MPD, the HTTP Streaming Client may decrypt the encrypted MPD according to the shared key, and obtain, from the HTTP Streaming Server, and play the streaming media content corresponding to the decrypted MPD according to the obtained decrypted MPD.

In this embodiment, an HTTP Streaming Server performs authentication on a third party device according to a received authentication request sent by the third party device, and if the authentication is successful, establishes a security tunnel with the third party device, and sends an authentication response indicating that the authentication is successful to the third party device through the security tunnel, so as to trigger the third party device to send a first identifier and content that needs to be processed by the third party and corresponds to the first identifier through the security tunnel; the HTTP Streaming Server receives the first identifier and the content that needs to be processed by the third party device and corresponds to the first identifier, where the first identifier and the content are sent by the third party device, processes an MPD corresponding to the first identifier according to the content that needs to be processed by the third party device, encrypts the processed MPD according to a shared key pre-configured by the HTTP Streaming Server and an HTTP Streaming Client or generated in a certain manner, and finally sends the encrypted MPD to the HTTP Streaming Client, so that the HTTP Streaming Client decrypts the encrypted MPD, and obtains and plays streaming media content corresponding to the decrypted MPD. A session key is not leaked, and the HTTP Streaming Server processes the MPD according to the content that needs to be processed by the third party device. Therefore, the MPD may not be interpreted by a third party device except the HTTP Streaming Server and the HTTP Streaming Client, thereby ensuring the security, integrity and high privacy of the MPD, and preventing the MPD from being interpreted by an invalid third party device.

Furthermore, an HTTP Streaming system of the present invention may further be based on a digital rights encryption protection technology (Digital Rights Management; DRM for short) mechanism, and applied in a scenario of a charging service. The implementation principle of the HTTP Streaming system is similar to the implementation principle of the method embodiment shown in FIG. 5, and the difference lies in that the key may be a symmetric key or an asymmetric key.

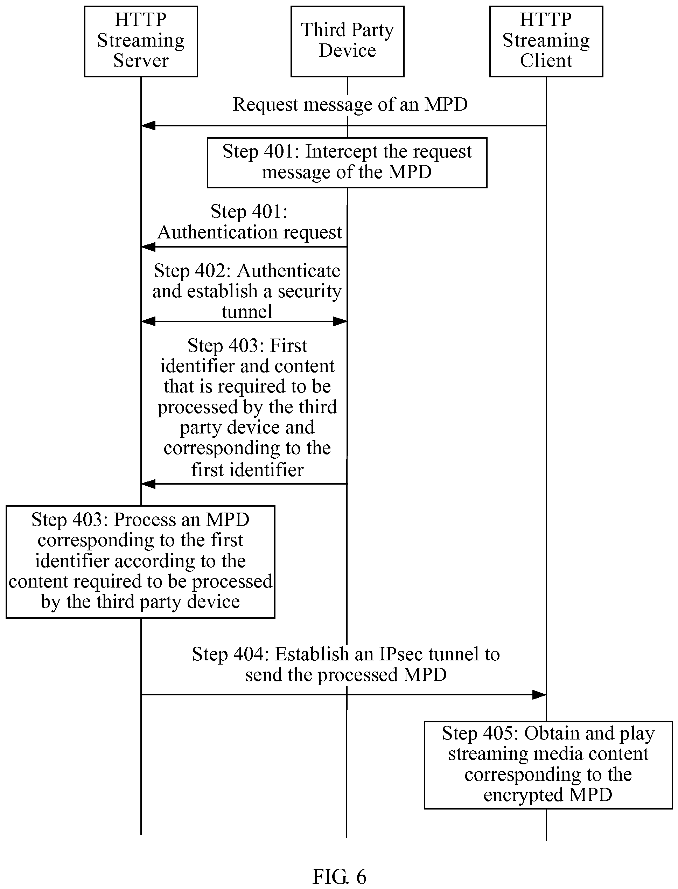

FIG. 6 is a signaling flowchart of another embodiment of a method for processing streaming media content according to the present invention. As shown in FIG. 6, on the basis of the embodiment shown in FIG. 4, the method of this embodiment includes:
Step 401: A third party device intercepts a request message of an MPD that is sent by an HTTP Streaming Client, and sends an authentication request to an HTTP Streaming Server.
Step 402: The HTTP Streaming Server performs authentication on the third party device according to the received authentication request, and if the authentication is successful, establishes a security tunnel with the third party device, and sends an authentication response indicating that the authentication is successful to the third party device through the security tunnel, so as to trigger the third party device to send a first identifier and content that needs to be processed by the third party device and corresponds to the first identifier through the security tunnel.
Step 403: The HTTP Streaming Server receives the first identifier and the content that needs to be processed by the third party device and corresponds to the first identifier, where the first identifier and the content are sent by the third party device through the security tunnel, and processes an MPD corresponding to the first identifier according to the content that needs to be processed by the third party device.
   In this embodiment, the content that needs to be processed by the third party device may include content required to be modified, added and/or deleted by the third party device, and the content may be advertisement information.
Step 404: The HTTP Streaming Server sends the processed MPD to the HTTP Streaming Client through an IPsec tunnel established between the HTTP Streaming Server and the HTTP Streaming Client.
Step 405: The HTTP Streaming Client obtains and plays streaming media content corresponding to the MPD that has undergone the security processing.

In this embodiment, an HTTP Streaming Server performs authentication on a third party device according to a received authentication request sent by the third party device, and if the authentication is successful, establishes a security tunnel with the third party device, and sends an authentication response indicating that the authentication is successful to the third party device through the security tunnel, so as to trigger the third party device to send a first identifier and content that needs to be processed by the third party and corresponds to the first identifier through the security tunnel; the HTTP Streaming Server receives the first identifier and the content that needs to be processed by the third party device and corresponds to the first identifier, processes an MPD corresponding to the first identifier according to the content that needs to be processed by the third party device, and sends the processed MPD to an HTTP Streaming Client through an IPsec tunnel pre-established between the HTTP Streaming Server and the HTTP Streaming Client, so that the HTTP Streaming Client decrypts the processed MPD, and obtains and plays streaming media content corresponding to the processed MPD. The IPsec tunnel can effectively prevent interception and modification of the third party device on the MPD. Therefore, the MPD is prevented from being interpreted by a third party device except the HTTP Streaming Server and the HTTP Streaming Client, thereby ensuring the security, integrity and high privacy of the MPD, and preventing the MPD from being interpreted by an invalid third party device.

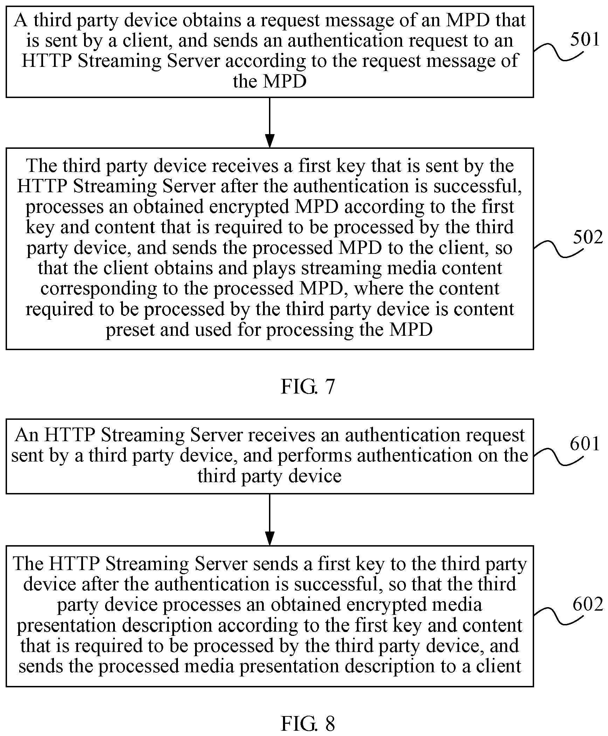

FIG. 7 is a flowchart of another embodiment of a method for processing streaming media content according to the present invention. As shown in FIG. 7, the method of this embodiment includes:
Step 501: A third party device obtains a request message of an MPD that is sent by a client, and sends an authentication request to an HTTP Streaming Server according to the request message of the MPD.
   In this embodiment, the client may specifically be an HTTP Streaming Client.
Step 502: The third party device receives a first key that is sent by the HTTP Streaming Server after the authentication is successful, processes an obtained encrypted MPD according to the first key and content that needs to be processed by the third party device, and sends the processed MPD to the client, so that the client obtains and plays streaming media content corresponding to the processed MPD, where the content that needs to be processed by the third party device is content preset and used for processing the MPD.

In this embodiment, the content that needs to be processed by the third party device may include content required to be modified, added and/or deleted by the third party device, and the content may be advertisement information.

In this embodiment, a third party device obtains a request message of an MPD that is sent by a client, sends an authentication request to an HTTP Streaming Server according to the request message of the MPD, receives a first key that is sent by the HTTP Streaming Server after the authentication is successful, processes an obtained encrypted MPD according to the first key and content that needs to be processed by the third party, and sends the processed MPD to the client, so that the client obtains and plays streaming media content corresponding to the processed MPD, thereby ensuring the security and integrity of the MPD, preventing the MPD from being interpreted by an invalid third party device, and further enabling a valid third party device to perform valid operations on the MPD.

Furthermore, in another embodiment of the present invention, on the basis of the embodiment shown in FIG. 7, a specific implementation manner for the third party device to receive a first key that is sent by the HTTP Streaming Server after the authentication is successful, process an obtained encrypted MPD according to the first key and content that needs to be processed by the third party device, and send the processed MPD to the client in step 502 is:
receiving, by the third party device, the first key that is sent by the HTTP Streaming Server after the authentication is successful, processing the obtained encrypted MPD according to the first key and the content that needs to be processed by the third party device, and sending the processed MPD to the client, so that the client obtains and plays streaming media content corresponding to the processed media presentation description, where the content that needs to be processed by the third party device is content preset and used for processing the MPD.

Alternatively, another specific implementation manner for the third party device to receive a first key that is sent by the HTTP Streaming Server after the authentication is successful, process an obtained encrypted MPD according to the first key and content that needs to be processed by the third party device, and send the processed MPD to the client in step 502 is:
receiving, by the third party device, the first key that is sent by the HTTP Streaming Server after the authentication is successful, decrypting the obtained encrypted MPD according to the first key, and processing the decrypted MPD according to the content that needs to be processed by the third party device; and
encrypting, by the third party device, the processed MPD according to the first key and sending the encrypted MPD to the client.

Alternatively, another specific implementation manner for the third party device to receive a first key that is sent by the HTTP Streaming Server after the authentication is successful, process an obtained encrypted MPD according to the first key and content that needs to be processed by the third party device, and send the processed MPD to the client in step 502 is:
adding, by the third party device, content that needs to be added by the third party device to the end of the MPD, where the MPD is an obtained encrypted MPD, the encrypted MPD is encrypted and obtained by the HTTP Streaming Server according to a second key, and the first key is derived from the second key; and
encrypting, by the third party device, the added MPD according to the received first key that is sent by the HTTP Streaming Server after the authentication is successful, and sending the encrypted MPD to the client.

Furthermore, in another embodiment of the present invention, on the basis of the embodiment shown in FIG. 7, the method may further include:
pre-configuring, by the third party device, a third key shared with the client.

Another specific implementation manner for the third party device to receive a first key that is sent by the HTTP Streaming Server after the authentication is successful, process an obtained encrypted MPD according to the first key and content that needs to be processed by the third party device, and send the processed MPD to the client in step 502 is:
receiving, by the third party device, the first key that is sent by the HTTP Streaming Server after the authentication is successful, decrypting the obtained encrypted MPD according to the first key, and processing the decrypted MPD according to the content that needs to be processed by the third party device; and

The third party device encrypts the processed MPD according to the third key and sends the encrypted MPD to the client.

FIG. 8 is a flowchart of another embodiment of a method for processing streaming media content according to the present invention. As shown in FIG. 8, the method of this embodiment includes:
Step 601: An HTTP Streaming Server receives an authentication request sent by a third party device, and performs authentication on the third party device.
Step 602: The HTTP Streaming Server sends a first key to the third party device after the authentication is successful, so that the third party device processes an obtained encrypted media presentation description according to the first key and content that needs to be processed by the third party device, and sends the processed media presentation description to a client.

In this embodiment, the third party device may perform the technical solution of the method embodiment shown in FIG. 7, and the implementation principle is similar, which will not be described herein again.

In this embodiment, an HTTP Streaming Server receives an authentication request sent by a third party device, performs authentication on the third party device, and sends a first key to the third party device after the authentication is successful, so that the third party device processes an obtained encrypted media presentation description according to the first key and content that needs to be processed by the third party device, and sends the processed media presentation description to the client, thereby ensuring the security and integrity of the MPD, preventing the MPD from being interpreted by an invalid third party device, and further enabling a valid third party device to perform valid operations on the MPD.

Furthermore, in another embodiment of the present invention, the method may further include:
encrypting, by the HTTP Streaming Server, the MPD according to the first key, and sending the encrypted MPD to the third party device; or
encrypting, by the HTTP Streaming Server, the MPD according to a second key, and sending the encrypted MPD to the third party device, where the first key is derived from the second key.

Furthermore, in another embodiment of the present invention, after step 601 and before step 602, the method further includes: establishing, by the HTTP Streaming Server, a security tunnel with the third party device, so that a specific implementation manner of sending a first key to the third party device in step 602 is:
sending an authentication response to the third party device through the security tunnel, where the authentication response carries the first key.

Alternatively, another specific implementation manner of sending a first key to the third party device in step 602 is:
sending the first key to the third party device through the security tunnel.

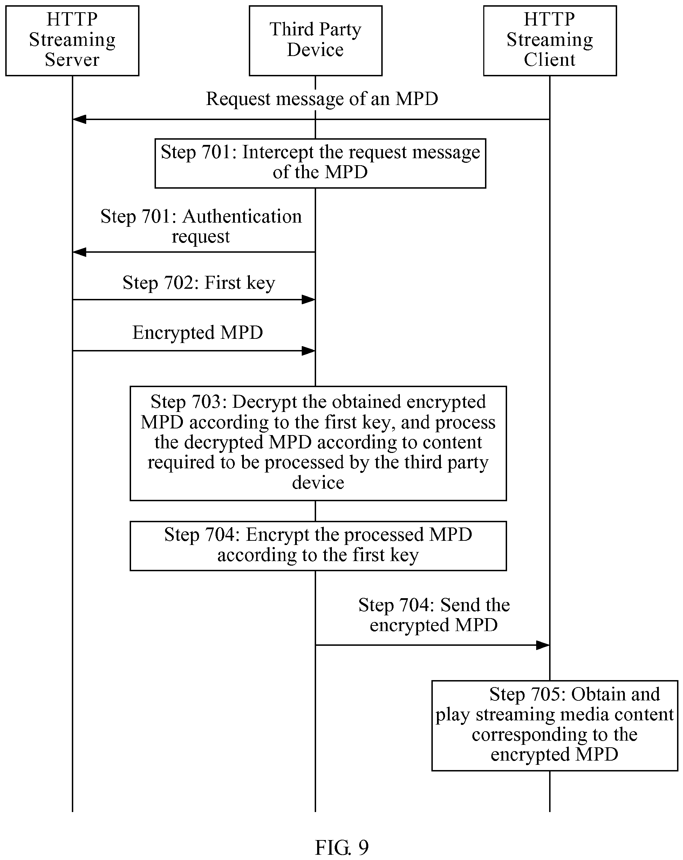

FIG. 9 is a signaling flowchart of another embodiment of a method for processing streaming media content according to the present invention. As shown in FIG. 9, in this embodiment, on the basis of the embodiment shown in FIG. 4, a system for processing streaming media content may be based on a shared key mechanism, that is, a shared key may be pre-configured between the HTTP Streaming Server and the HTTP Streaming Client, or a shared key may be generated in a certain manner. For example, if a shared key is negotiated and generated in an authentication manner, and the authentication manner may include an SSL or a TLS, the method of this embodiment includes:
Step 701: A third party device obtains a request message of an MPD that is sent by an HTTP Streaming Client, and sends an authentication request to an HTTP Streaming Server according to the request message of the MPD.
Step 702: The HTTP Streaming Server performs authentication on the third party device according to the authentication request, and sends a first key to the third party device after the authentication is successful.
   It should be noted that, the first key is a shared key. In addition, when the authentication is not successful, the HTTP Streaming Server may reject the authentication request of the third party device.
Step 703: The third party device decrypts an obtained encrypted MPD according to the first key, and processes the decrypted MPD according to content that needs to be processed by the third party device.
   In this embodiment, the content that needs to be processed by the third party device may include content required to be modified, added and/or deleted by the third party device, and the content may be advertisement information.
Step 704: The third party device encrypts the processed MPD according to the first key and sends the encrypted MPD to the HTTP Streaming Client.
Step 705: The HTTP Streaming Client obtains and plays streaming media content corresponding to the processed MPD.

Specifically, in this embodiment, after receiving the encrypted MPD sent by the third party device, the HTTP Streaming Client decrypts the encrypted MPD according to the first key (for example, a shared key), obtains the decrypted MPD, and finally obtains and plays streaming media content corresponding to the MPD.

In this embodiment, a third party device obtains a request message of an MPD that is sent by an HTTP Streaming Client, sends an authentication request to an HTTP Streaming Server according to the request message of the MPD, receives a first key that is sent by the HTTP Streaming Server after the authentication is successful, processes an obtained encrypted MPD according to the first key, and sends the processed MPD to the HTTP Streaming Client, so that the HTTP Streaming Client obtains and plays streaming media content corresponding to the processed MPD, thereby ensuring the security and integrity of the MPD, and preventing the MPD from being interpreted by an invalid third party device, that is, enabling a valid third party device to perform operations on the encrypted MPD.

Furthermore, in another embodiment of the present invention, an HTTP Streaming system may further be based on a DRM mechanism, and therefore may be used in a scenario of a charging service. The implementation principle of the HTTP Streaming system is similar to the implementation principle of the method in the embodiment shown in FIG. 9, and the difference lies in that the first key in this embodiment is a symmetric key or an asymmetric key.

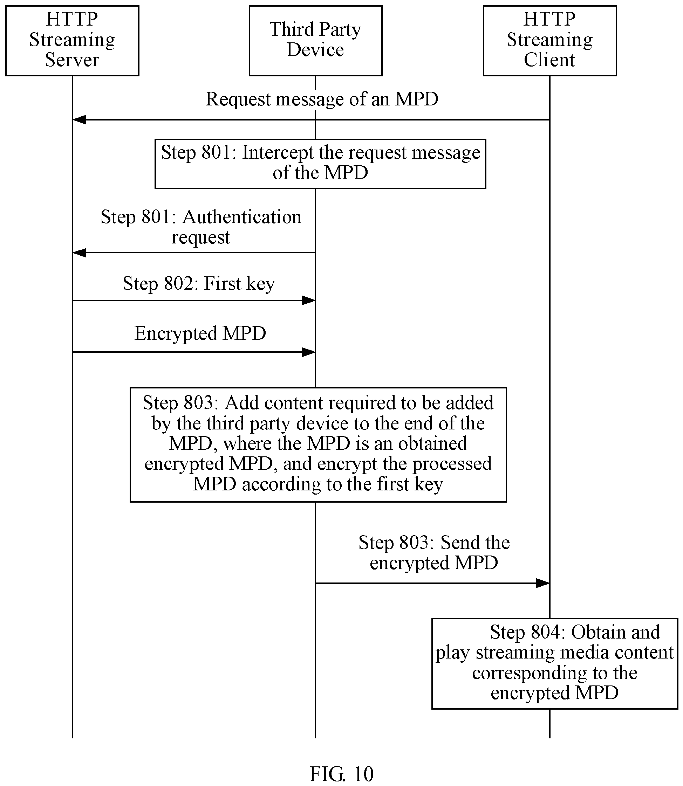

FIG. 10 is a signaling flowchart of another embodiment of a method for processing streaming media content according to the present invention. As shown in FIG. 10, on the basis of the embodiment shown in FIG. 4, the method of this embodiment includes:
Step 801: A third party device obtains a request message of an MPD that is sent by an HTTP Streaming Client, and sends an authentication request to an HTTP Streaming Server according to the request message of the MPD.
Step 802: The HTTP Streaming Server performs authentication on the third party device according to the authentication request, and sends a first key to the third party device after the authentication is successful.
   It should be noted that, the first key in this embodiment is derived from a second key shared with the HTTP Streaming Server and the HTTP Streaming Client. In addition, when the authentication is not successful, the HTTP Streaming Server may reject the authentication request of the third party device.
Step 803: The third party device adds content that needs to be added by the third party device to the end of the MPD, where the MPD is an obtained encrypted MPD, encrypts the processed MPD according to the first key, and sends the encrypted MPD to the HTTP Streaming Client.

The encrypted MPD is encrypted and obtained by the HTTP Streaming Server according to the second key, and the first key is derived from the second key.

Specifically, in this embodiment, the HTTP Streaming Server and the HTTP Streaming Client share two keys, namely, the first key and the second key, where the first key is derived from the second key. The HTTP Streaming Server encrypts and sends the MPD according to the second key and the request message of the MPD that is sent by the HTTP Streaming Client. After intercepting the encrypted MPD, the third party device adds content that needs to be added by the third party device to the end of the encrypted MPD, encrypts the processed MPD according to the received first key that is sent by the HTTP Streaming Server after the authentication is successful, and finally sends the encrypted MPD to the HTTP Streaming Client. The third party device obtains the first key, so that the third party device cannot decrypt the intercepted MPD encrypted by the HTTP Streaming Server, thereby effectively ensuring the high privacy of the MPD.

Step 804: The HTTP Streaming Client obtains and plays streaming media content corresponding to the processed MPD.

It should be further noted that, in this embodiment, the HTTP Streaming Client may derive the first key according to the second key to verify validity of a signature of the third party device. Then, the first key and the second key are used to decrypt the encrypted MPD sent by the third party device, and obtain and play the streaming media content corresponding to the decrypted MPD.

In this embodiment, a third party device obtains a request message of an MPD that is sent by an HTTP Streaming Client, sends an authentication request to an HTTP Streaming Server according to the request message of the MPD, receives a first key that is sent by the HTTP Streaming Server after the authentication is successful, adds content that needs to be added by the third party device to the end of the obtained MPD, where the MPD is an encrypted MPD, encrypts the processed MPD according to the first key, and sends the encrypted MPD to the HTTP Streaming Client, so that the HTTP Streaming Client obtains and plays streaming media content corresponding to the processed MPD, thereby ensuring the security and integrity of the MPD, and preventing the MPD from being interpreted by an invalid third party device, that is, enabling a valid third party device to perform operations on the encrypted MPD. In addition, the third party device obtains the first key, so that the third party device cannot decrypt an intercepted MPD encrypted by the HTTP Streaming Server according to the second key, thereby effectively ensuring the high privacy of the MPD.

It should be further noted that, the HTTP Streaming Client may determine whether the MPD is from the HTTP Streaming Server or the third party device by verifying signatures (Message Authentication Code) corresponding to different private keys, so as to enable the user to identify whether the MPD is modified validly or invalidly. At the same time, a signature mechanism based on the shared key is more efficient than a signature of a public key mechanism in the prior art from the perspective of both computation complexity and bandwidth, and has the lowest additional costs, that is, achieves high efficiency of the HTTP Streaming Server and the HTTP Streaming Client.

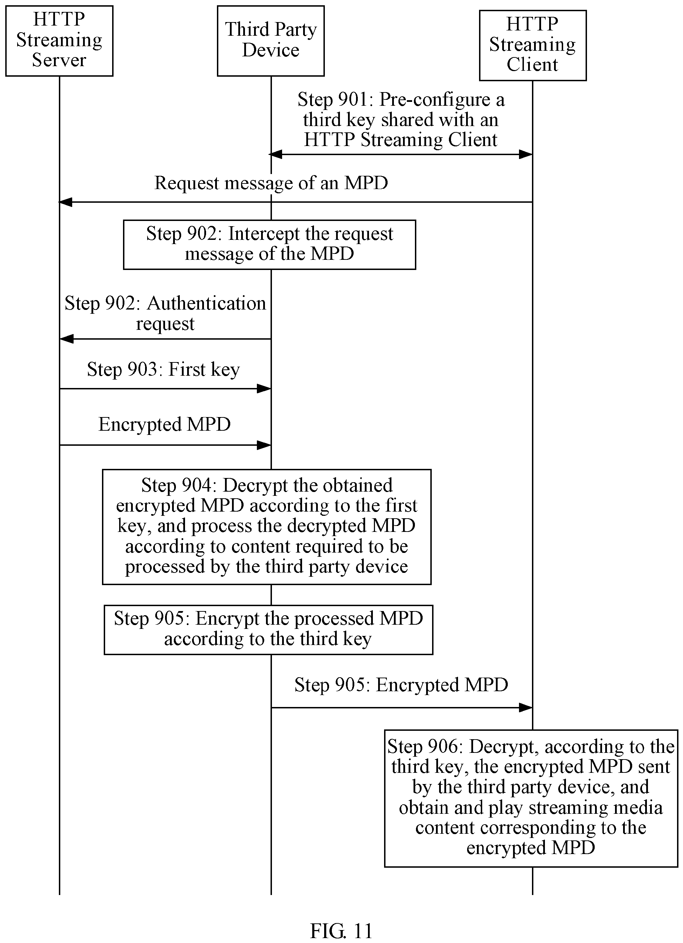

FIG. 11 is a signaling flowchart of another embodiment of a method for processing streaming media content according to the present invention. As shown in FIG. 11, on the basis of the embodiment shown in FIG. 4, in this embodiment, taking a third party device being an operator device as an example, the technical solution of this embodiment is introduced in detail. The method of this embodiment includes:
Step 901: A third party device pre-configures a third key shared with an HTTP Streaming Client.
Step 902: The third party device obtains a request message of an MPD that is sent by the HTTP Streaming Client, and sends an authentication request to an HTTP Streaming Server according to the request message of the MPD.
Step 903: The HTTP Streaming Server performs authentication on the third party device according to the authentication request, and sends a first key to the third party device after the authentication is successful.
   It should be noted that, when the authentication is not successful, the HTTP Streaming Server may reject the authentication request of the third party device.
Step 904: The third party device decrypts an obtained encrypted MPD according to the first key, and processes the decrypted MPD according to content that needs to be processed by the third party device.
Step 905: The third party device encrypts the processed MPD according to the third key and sends the encrypted MPD to the HTTP Streaming Client.
Step 906: The HTTP Streaming Client decrypts, according to the third key, the encrypted MPD sent by the third party device, and obtains and plays streaming media content corresponding to the encrypted MPD.

In this embodiment, a third party device obtains a request message of an MPD that is sent by an HTTP Streaming Client, sends an authentication request to an HTTP Streaming Server according to the request message of the MPD, receives a first key that is sent by the HTTP Streaming Server after the authentication is successful, processes a decrypted MPD according to content that needs to be processed by the third party device, encrypts the processed MPD according to a third key pre-configured by the third party device and the HTTP Streaming Client, and sends the encrypted MPD to the HTTP Streaming Client, so that the HTTP Streaming Client obtains and plays streaming media content corresponding to the processed MPD, thereby ensuring the security and integrity of the MPD, and preventing the MPD from being interpreted by an invalid third party device, that is, enabling a valid third party device to perform operations on the encrypted MPD. In addition, the operator device can view the streaming media content at any time.

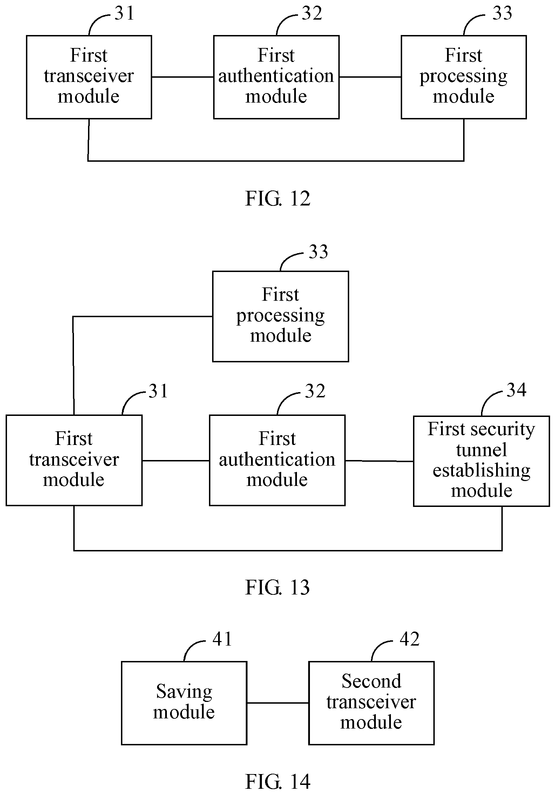

FIG. 12 is a schematic structural diagram of an embodiment of an HTTP Streaming Server according to the present invention. As shown in FIG. 12, the HTTP Streaming Server of this embodiment includes: a first transceiver module 31, a first authentication module 32 and a first processing module 33, where the first transceiver module 31 is adapted to receive an authentication request sent by a third party device; the first authentication module 32 is adapted to perform authentication on the third party device according to the authentication request received by the first transceiver module 31; the first transceiver module 31 is adapted to: if the authentication of the first authentication module 32 is successful, send an authentication response indicating that the authentication is successful to the third party device, and receive a first identifier and content that needs to be processed by the third party device and corresponds to the first identifier, where the first identifier is an identifier of an MPD; the first process module 33 is adapted to process the MPD corresponding to the first identifier according to the first identifier and the content that needs to be processed by the third party device and corresponds to the first identifier, the first identifier and the content being received by the first transceiver module 31; and the first transceiver module 31 is adapted to perform security processing on the MPD processed by the first processing module 33, and send the MPD that has undergone the security processing to a client, so that the client obtains and plays streaming media content corresponding to the MPD that has undergone the security processing.

The HTTP Streaming Server of this embodiment may perform the technical solution of the method embodiment shown in FIG. 2, and the implementation principle is similar, which will not be described herein again.

In this embodiment, an HTTP Streaming Server receives an authentication request sent by a third party device, performs authentication on the third party device according to the authentication request, and if the authentication is successful, sends an authentication response indicating that the authentication is successful to the third party device, receives a first identifier and content that needs to be processed by the third party device and corresponds to the first identifier, where the first identifier and the content are sent by the third party device, processes an MPD corresponding to the first identifier according to the content that needs to be processed by the third party device, performs security processing on the processed MPD, and finally sends the MPD that has undergone the security processing to a client, so that the client obtains and plays streaming media content corresponding to the MPD that has undergone the security processing, thereby ensuring the integrity, security and high privacy of the MPD, and preventing the MPD from being interpreted by an invalid third party device.

FIG. 13 is a schematic structural diagram of another embodiment of an HTTP Streaming Server according to the present invention. As shown in FIG. 13, on the basis of the embodiment shown in FIG. 12, the HTTP Streaming Server further includes a first security tunnel establishing module 34, adapted to: if the authentication of the first authentication module 32 is successful, establish a security tunnel with a third party device. The first transceiver module 31 is specifically adapted to send a response indicating that the authentication is successful to the third party device through the security tunnel established by the first security tunnel establishing module 34, so as to trigger the third party device to send a first identifier and content that needs to be processed by the third party and corresponds to the first identifier, and receive the first identifier and the content that needs to be processed by the third party device and corresponds to the first identifier through the security tunnel.

In addition, the first transceiver module 31 is specifically adapted to encrypt the processed MPD according to a pre-configured key, and send the encrypted MPD to the client.

The HTTP Streaming Server of this embodiment may perform the technical solution of the method embodiment shown in FIG. 5, and the implementation principle is similar, which will not be described herein again.

In this embodiment, an HTTP Streaming Server receives an authentication request sent by a third party device, performs authentication on the third party device according to the authentication request, and if the authentication is successful, establishes a security tunnel with the third party device, sends an authentication response indicating that the authentication is successful to the third party device through the security tunnel, receives a first identifier and content that needs to be processed by the third party device and corresponds to the first identifier, where the first identifier and the content are sent by the third party device through the security tunnel, processes an MPD corresponding to the first identifier according to the content that needs to be processed by the third party device, encrypts the processed MPD according to a shared key pre-configured by the HTTP Streaming Server and a client or generated in a certain manner, and finally sends the encrypted MPD to the client, so that the client decrypts the encrypted MPD, and obtains and plays streaming media content corresponding to the decrypted MPD. A session key is not leaked, and the HTTP Streaming Server processes the MPD according to the content that needs to be processed by the third party device. Therefore, the MPD is prevented from being interpreted by a third party device except the HTTP Streaming Server and the HTTP Streaming Client, thereby ensuring the security, integrity and high privacy of the MPD and preventing the MPD from being interpreted by an invalid third party device.

Furthermore, in another embodiment of the present invention, the first transceiver module 31 is specifically adapted to send the processed MPD to the client through an IPsec tunnel established between the HTTP Streaming Server and the client.

The HTTP Streaming Server of this embodiment may perform the technical solution of the method embodiment shown in FIG. 6, and the implementation principle is similar, which will not be described herein again.

In this embodiment, an HTTP Streaming Server receives an authentication request sent by a third party device, performs authentication on the third party device according to the authentication request, and if the authentication is successful, establishes a security tunnel with the third party device, sends an authentication response indicating that the authentication is successful to the third party device through the security tunnel, receives a first identifier and content that needs to be processed by the third party device and corresponds to the first identifier, where the first identifier and the content are sent by the third party device, processes an MPD corresponding to the first identifier according to the content that needs to be processed by the third party device, and sends the processed MPD to the client through an IPsec tunnel pre-established between the HTTP Streaming Server and the client, so that the client decrypts the processed MPD, and obtains and plays streaming media content corresponding to the processed MPD. The IPsec tunnel can effectively prevent interception and modification of the third party device on the MPD. Therefore, the MPD is prevented from being interpreted by a third party device except the HTTP Streaming Server and the client, thereby ensuring the security, integrity and high privacy of the MPD and preventing the MPD from being interpreted by an invalid third party device.

FIG. 14 is a schematic structural diagram of an embodiment of a third party device according to the present invention. As shown in FIG. 14, the third party device of this embodiment includes: a saving module 41 and a second transceiver module 42, where the saving module 41 is adapted to save content that needs to be processed by the third party device; and the second transceiver module 42 is adapted to obtain a request message of an MPD that is sent by a client, where the request message of the MPD includes a first identifier and the first identifier is an identifier of the MPD; send an authentication request to an HTTP Streaming Server according to the request message of the MPD, and receive an authentication response returned by the HTTP Streaming Server; and if the received authentication response is a response indicating that the authentication is successful, send the first identifier and content that needs to be processed by the third party device, saved by the saving module 41, and corresponding to the first identifier to the HTTP Streaming Server, so that the HTTP Streaming Server processes an MPD corresponding to the first identifier according to the content that needs to be processed by the third party device, performs security processing on the processed MPD, and sends the MPD that has undergone the security processing to the client.

The third party device of this embodiment may perform the technical solution of the method embodiment shown in FIG. 3, and the implementation principle is similar, which will not be described herein again.

In this embodiment, a third party device obtains a request message of an MPD that is sent by a client, where the request message of the MPD includes a first identifier and the first identifier is an identifier of the MPD, sends an authentication request to an HTTP Streaming Server according to the request message of the MPD, receives an authentication response returned by the HTTP Streaming Server, and if the authentication response received by the third party device is an authentication response indicating that the authentication is successful, sends the first identifier and content that needs to be processed by the third party device and corresponds to the first identifier to the HTTP Streaming Server, so that the HTTP Streaming Server processes the MPD corresponding to the first identifier according to the content that needs to be processed by the third party device, performs security processing on the processed MPD, and sends the MPD that has undergone the security processing to the client, thereby ensuring the security and integrity of the MPD.

Furthermore, in another embodiment of the present invention, on the basis of the embodiment shown in FIG. 14, the device may further include: a second security tunnel establishing module, adapted to: if the authentication on the third party device is successful, establish a security tunnel with the HTTP Streaming Server.

The second transceiver module 42 is specifically adapted to receive the authentication response indicating that the authentication is successful through the security tunnel established by the second security tunnel establishing module, and send the first identifier and the content that needs to be processed by the third party device and corresponds to the first identifier to the HTTP Streaming Server through the security tunnel.

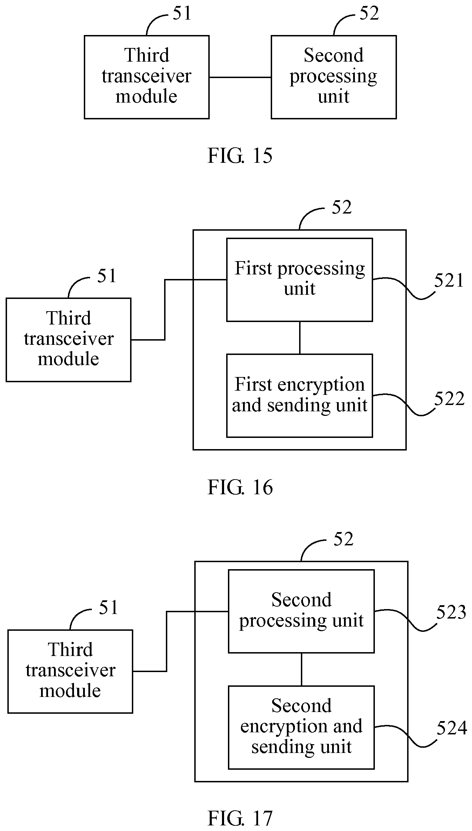

FIG. 15 is a schematic structural diagram of another embodiment of a third party device according to the present invention. As shown in FIG. 15, the third party device of this embodiment includes: a third transceiver module 51 and a second processing module 52, where the third transceiver module 51 is adapted to obtain a request message of an MPD that is sent by a client, send an authentication request to an HTTP Streaming Server according to the request message of the MPD, and receive a first key that is sent by the HTTP Streaming Server after the authentication is successful; and the second process module 52 is adapted to process an obtained encrypted MPD according to content that needs to be processed by the third party device and the first key received by the third transceiver module 51, and send the processed MPD to the client, so that the client obtains and plays streaming media content corresponding to the processed MPD.

The third party device of this embodiment may perform the technical solution of the method embodiment shown in FIG. 7, and the implementation principle is similar, which will not be described herein again.

In this embodiment, a third party device obtains a request message of an MPD sent by an HTTP Streaming Client, sends an authentication request to an HTTP Streaming Server according to the request message of the MPD, receives a first key that is sent by the HTTP Streaming Server after the authentication is successful, processes an obtained encrypted MPD according to the first key, and sends the processed MPD to a client, so that the client obtains and plays streaming media content corresponding to the processed MPD, thereby ensuring the security and integrity of the MPD, preventing the MPD from being interpreted by an invalid third party device, and further enabling a valid third party device to perform valid operations on the MPD.

FIG. 16 is a schematic structural diagram of another embodiment of a third party device according to the present invention. As shown in FIG. 16, on the basis of the embodiment shown in FIG. 15, the second processing module 52 includes: a first processing unit 521 and a first encryption and sending unit 522, where the first processing unit 521 is adapted to decrypt the obtained encrypted MPD according to the first key, and process the decrypted MPD according to the content that needs to be processed by the third party device; and the first encryption and sending unit 522 is adapted to encrypt, according to the first key, the MPD processed by the first processing unit 521, and send the encrypted MPD to the client.

The third party device of this embodiment may perform the technical solution of the method embodiment shown in FIG. 9, and the implementation principle is similar, which will not be described herein again.

In this embodiment, a third party device obtains a request message of an MPD that is sent by an HTTP Streaming Client, sends an authentication request to an HTTP Streaming Server according to the request message of the MPD, receives a first key that is sent by the HTTP Streaming Server after the authentication is successful, processes an obtained encrypted MPD according to the first key, and sends the processed MPD to the client, so that the client obtains and plays streaming media content corresponding to the processed MPD, thereby ensuring the security and integrity of the MPD, and preventing the MPD from being interpreted by an invalid third party device, that is, enabling a valid third party device to perform operations on the encrypted MPD.

FIG. 17 is a schematic structural diagram of another embodiment of a third party device according to the present invention. As shown in FIG. 17, on the basis of the embodiment shown in FIG. 15, the second processing module 52 includes: a second processing unit 523 and a second encryption and sending unit 524, where the second processing unit 523 is adapted to add content that needs to be added by the third party device to the end of the MPD, where the MPD is an obtained encrypted MPD, the encrypted MPD is encrypted and obtained by the HTTP Streaming Server according to a second key, and the first key is derived from the second key; and the second encryption and sending unit 524 is adapted to encrypt the added MPD according to the received first key that is sent by the HTTP Streaming Server after the authentication is successful, and send the encrypted MPD to the HTTP Streaming Client.

The third party device of this embodiment may perform the technical solution of the method embodiment shown in FIG. 10, and the implementation principle is similar, which will not be described herein again.

In this embodiment, a third party device obtains a request message of an MPD that is sent by an HTTP Streaming Client, sends an authentication request to an HTTP Streaming Server according to the request message of the MPD, receives a first key that is sent by the HTTP Streaming Server after the authentication is successful, adds content that needs to be added by the third party device to the end of the obtained encrypted MPD, encrypts the processed MPD according to the first key, and sends the encrypted MPD to the client, so that the client obtains and plays streaming media content corresponding to the processed MPD, thereby ensuring the security and integrity of the MPD, and preventing the MPD from being interpreted by an invalid third party device, that is, enabling a valid third party device to perform operations on the encrypted MPD. In addition, the third party device obtains the first key, so that the third party device cannot decrypt an intercepted MPD encrypted by the HTTP Streaming Server according to the second key, thereby effectively ensuring the high privacy of the MPD.

It should be further noted that, the HTTP Streaming Client may determine whether the MPD is from the HTTP Streaming Server or the third party device by verifying signatures (Message Authentication Code) corresponding to different private keys, so as to enable the user to identify whether the PMD is modified validly or invalidly. At the same time, a signature mechanism based on the shared key is much more efficient than a signature based on a public key mechanism from the perspective of both computation complexity and bandwidth, and has the lowest additional costs, that is, achieves high efficiency of the HTTP Streaming Server and the HTTP Streaming Client.

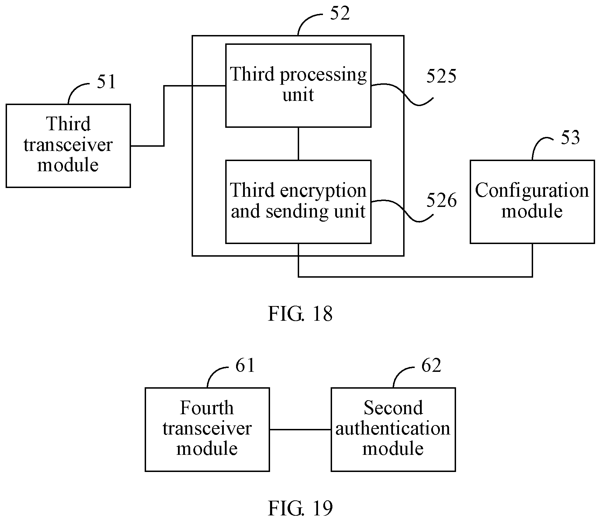

FIG. 18 is a schematic structural diagram of another embodiment of a third party device according to the present invention. As shown in FIG. 18, on the basis of the embodiment shown in FIG. 15, the third party device further includes: a configuration module 53, adapted to pre-configure a third key shared with the client; the second processing module 52 includes: a third processing unit 525 and a third encryption and sending unit 526, where the third processing unit 525 is adapted to decrypt the obtained encrypted MPD according to the first key, and process the decrypted MPD according to the content that needs to be processed by the third party device; and the third encryption and sending unit 526 is adapted to encrypt the processed MPD according to the third key and send the encrypted MPD to the client.

The third party device of this embodiment may perform the technical solution of the method embodiment shown in FIG. 11, and the implementation principle is similar, which will not be described herein again.

In this embodiment, a third party device obtains a request message of an MPD that is sent by an HTTP Streaming Client, sends an authentication request to an HTTP Streaming Server according to the request message of the MPD, receives a first key that is sent by the HTTP Streaming Server after the authentication is successful, processes a decrypted MPD according to content that needs to be processed by the third party device, encrypts the processed MPD according to a third key pre-configured by the third party device and the client, and sends the encrypted MPD to the client, so that the client obtains and plays streaming media content corresponding to the processed MPD, thereby ensuring the security and integrity of the MPD, and preventing the MPD from being interpreted by an invalid third party device, that is, enabling a valid third party device to perform operations on the encrypted MPD. In addition, the operator device can view the streaming media content at any time.

FIG. 19 is a schematic structural diagram of an embodiment of an HTTP Streaming Server according to the present invention. As shown in FIG. 19, the HTTP Streaming Server includes: a fourth transceiver module 61 and a second authentication module 62, where the fourth transceiver module 61 is adapted to receive an authentication request sent by a third party device; the second authentication module 62 is adapted to perform authentication on the third party device; and the fourth transceiver module 61 is adapted to send a first key to the third party device after the authentication of the second authentication module 62 is successful, so that the third party device processes an obtained encrypted MPD according to the first key and content that needs to be processed by the third party device, and sends the processed MPD to a client.

The HTTP Streaming Server of this embodiment may perform the technical solution of the embodiment shown in FIG. 8, and the implementation principle is similar, which will not be described herein again.

In this embodiment, an HTTP Streaming Server receives an authentication request sent by a third party device, performs authentication on the third party device, and sends a first key to the third party device after the authentication is successful, so that the third party device processes an obtained encrypted media presentation description according to the first key and content that needs to be processed by the third party device, and sends the processed media presentation description to a client, thereby ensuring the security and integrity of the MPD, preventing the MPD from being interpreted by an invalid third party device, and further enabling a valid third party device to perform valid operations on the MPD.

Furthermore, in another embodiment of the present invention, on the basis of the embodiment shown in FIG. 19, the HTTP Streaming Server further includes: an encryption module, adapted to encrypt the MPD according to the first key; or,
the encryption module, adapted to encrypt the MPD according to a second key, where the first key is derived from the second key.

In addition, the fourth transceiver module 61 is further adapted to send the encrypted MPD to the third party device.

Furthermore, the HTTP Streaming Server further includes a third security tunnel establishing module, adapted to establish a security tunnel with the third party device after the authentication is successful; and the fourth transceiver module 61 is specifically adapted to send, after the authentication is successful, an authentication response to the third party device through the security tunnel established by the third security tunnel establishing module, where the authentication response carries the first key; or
the fourth transceiver module 61 is specifically adapted to: after the authentication is successful, send the first key to the third party device through the security tunnel established by the third security tunnel establishing module.

The present invention further provides a system for processing media content. The system of this embodiment includes: an HTTP Streaming Client, a third party device and an HTTP Streaming Server.

Specifically, the HTTP Streaming Server may be the HTTP Streaming Server in the embodiment shown in FIG. 12 or FIG. 13; and the third party device may be the third party device in the embodiment shown in FIG. 14.

Alternatively, the HTTP Streaming Server may be the HTTP Streaming Server in the embodiment shown in FIG. 19; and the third party device may be the third party device in the embodiments shown in FIG. 15 to FIG. 18.

A person of ordinary skill in the art may understand that, all or a part of the steps of the foregoing method embodiments may be implemented by a program instructing relevant hardware. The program may be stored in a computer readable storage medium. When the program is run, the steps of the foregoing method embodiments are performed. The foregoing storage medium includes any medium capable of storing program codes, such as a ROM, a RAM, a magnetic disk, or an optical disk.

Finally, it should be noted that the foregoing embodiments are merely intended for describing the technical solutions of the present invention rather than limiting the present invention. Although the present invention is described in detail with reference to the foregoing embodiments, a person of ordinary skill in the art should understand that modifications can still be made to the technical solutions described in the foregoing embodiments, or equivalent replacements can be made to some technical features in the technical solutions, as long as such modifications or replacements do not cause the essence of the corresponding technical solutions to depart from the scope of the technical solutions of the embodiments of the present invention.

## Claims

1. A method for processing streaming media content, comprising:
Receiving (101), by a Hyper Text Transfer Protocol, HTTP, streaming server an authentication request sent by a third party device, performing authentication on the third party device according to the authentication request, and if the authentication is successful, sending an authentication response indicating that the authentication is successful to the third party device;
Receiving (102), by the HTTP streaming server, from the third party device, a first identifier and content that corresponds to the first identifier, and processing the media presentation description corresponding to the first identifier according to the content, wherein the first identifier is an identifier of a media presentation description; and
Performing (103), by the HTTP streaming server, encryption on the processed media presentation description, and sending the media presentation description that has undergone the encryption to a client, causing the client to obtain and play streaming media content corresponding to the media presentation description that has undergone the encryption.

2. The method according to claim 1, wherein the receiving, by the HTTP streaming server, an authentication request sent by a third party device, performing authentication on the third party device according to the authentication request, and if the authentication is successful, sending an authentication response indicating that the authentication is successful to the third party device comprise:
receiving, by the HTTP streaming server, the authentication request sent by the third party device, performing authentication on the third party device according to the authentication request, and if the authentication is successful, establishing a security tunnel with the third party device, and sending the authentication response indicating that the authentication is successful to the third party device through the security tunnel.

3. The method according to claim 2, wherein the receiving, by the HTTP streaming server, the first identifier and the content that corresponds to the first identifier comprises:
receiving, by the HTTP streaming server, the first identifier and the content that corresponds to the first identifier, wherein the first identifier and the content are sent by the third party device through the security tunnel.

4. The method according to any one of claims 1 to 3, wherein the performing, by the HTTP streaming server, encryption on the processed media presentation description, and
sending the media presentation description that has undergone the encryption to the client comprise:
encrypting, by the HTTP streaming server, the processed media presentation description according to a pre-configured key, and sending the encrypted media presentation description to the client; or,
sending, by the HTTP streaming server, the processed media presentation description to the client through an Internet protocol security tunnel established between the hyper text transfer protocol streaming server and the client.

5. A method for processing streaming media content, comprising:
Obtaining (201), by a third party device, a request message of a media presentation description, wherein the request message is sent by a client, wherein the request message of the media presentation description comprises a first identifier and the first identifier is an identifier of the media presentation description;
Sending (202), by the third party device, an authentication request to a Hyper Text Transfer Protocol, HTTP, streaming server according to the request message of the media presentation description, and receiving an authentication response returned by the hyper text transfer protocol streaming server; and
Sending (203), by the third party device, if the received authentication response is a response indicating that the authentication is successful, the first identifier and content that corresponds to the first identifier to the HTTP streaming server causing the HTTP streaming server to process the media presentation description corresponding to the first identifier according to the content, perform encryption on the processed media presentation description, and send the media presentation description that has undergone the encryption to the client.

6. The method according to claim 5, wherein the sending, by the third party device, an authentication request to the HTTP streaming server according to the request message of the media presentation description, and receiving an authentication response returned by the HTTP streaming server comprise:
sending, by the third party device, the authentication request to the HTTP streaming server according to the request message of the media presentation description; and
if the authentication on the third party device is successful, establishing, by the third party device, a security tunnel with the HTTP streaming server, and receiving the authentication response indicating that the authentication is successful through the security tunnel.

7. The method according to claim 6, wherein the sending, by the third party device, if the received authentication response is a response indicating that the authentication is successful, the first identifier and the content that corresponds to the first identifier to the HTTP streaming server comprises:
if the third party device receives the response indicating that the authentication is successful through the security tunnel, sending, by the third party device, the first identifier and the content that corresponds to the first identifier to the HTTP streaming server through the security tunnel.

8. A Hyper Text Transfer Protocol, HTTP, streaming server, comprising:
a first transceiver module (31), adapted to receive an authentication request sent by a third party device;
a first authentication module (32), adapted to perform authentication on the third party device according to the authentication request received by the first transceiver module (31), wherein
the first transceiver module (31) is adapted to: when the authentication of the first authentication module (32) is successful, send an authentication response indicating that the authentication is successful to the third party device, and receive a first identifier and content that corresponds to the first identifier, wherein the first identifier is an identifier of a media presentation description; and
a first processing module (33), adapted to process the media presentation description corresponding to the first identifier according to the first identifier and the content that corresponds to the first identifier, the first identifier and the content being received by the first transceiver module (31), wherein
the first transceiver module (31) is adapted to perform encryption on the media presentation description processed by the first processing module (33), and send the media presentation description that has undergone the encryption to a client.

9. The HTTP streaming server according to claim 8, further comprising:
a first security tunnel establishing module (34), adapted to: if the authentication of the first authentication module (32) is successful, establish a security tunnel with the third party device, wherein
the first transceiver module (31) is specifically adapted to send an authentication response indicating that the authentication is successful to the third party device through the security tunnel established by the first security tunnel establishing module (34); and receive, the first identifier and the content that corresponds to the first identifier through the security tunnel.

10. The HTTP streaming server according to claim 8 or 9, wherein the first transceiver module (31) is specifically adapted to encrypt the processed media presentation description according to a pre-configured key, and send the encrypted media presentation description to the client; or, the first transceiver module (31) is specifically adapted to send the processed media presentation description to the client through an Internet protocol security tunnel established between the HTTP streaming server and the client.

11. A third party device, comprising:
a saving module (41), adapted to save content that corresponds to a first identifier; and
a transceiver module (42), adapted to obtain a request message of a media presentation description that is sent by a client, wherein the request message of the media presentation description comprises the first identifier and the first identifier is an identifier of the media presentation description; send an authentication request to a Hyper Text Transfer Protocol, HTTP, streaming server according to the request message of the media presentation description, and receive an authentication response returned by the HTTP streaming server; and if the received authentication response is a response indicating that the authentication is successful, send the first identifier and the content saved by the saving module (41) to the HTTP streaming server, causing the HTTP streaming server to process the media presentation description corresponding to the first identifier according to the content, perform encryption on the processed media presentation description, and send the media presentation description that has undergone the encryption to the client.

12. The third party device according to claim 11, further comprising:
a security tunnel establishing module (42), adapted to: if the authentication on the third party device is successful, establish a security tunnel with the HTTP streaming server, wherein
the transceiver module (42) is specifically adapted to receive an authentication response indicating that the authentication is successful through the security tunnel established by the security tunnel establishing module (42), and send the first identifier and the content that corresponds to the first identifier to the HTTP streaming server through the security tunnel.

## Patentansprüche

1. Verfahren zum Verarbeiten von Streaming-Medieninhalt, das die folgenden Schritte umfasst:
Empfangen (101), durch einen "Hyper Text Transfer Protocol"-Streamingserver bzw. HTTP-Streamingserver einer von einer Drittparteivorrichtung gesendeten Authentisierungsanfrage, Durchführen einer Authentisierung an der Drittparteivorrichtung gemäß der Authentisierungsanfrage und, wenn die Authentisierung erfolgreich ist, Senden einer Authentisierungsantwort, die anzeigt, dass die Authentisierung erfolgreich ist, an die Drittparteivorrichtung;
Empfangen (102), durch den HTTP-Streamingserver, von der Drittparteivorrichtung einer ersten Kennung und von Inhalt, der der ersten Kennung entspricht, und Verarbeiten der Medienpräsentationsbeschreibung, die der ersten Kennung entspricht, gemäß dem Inhalt, wobei die erste Kennung eine Kennung einer Medienpräsentationsbeschreibung ist; und
Durchführen (103), durch den HTTP-Streamingserver, von Verschlüsselung an der verarbeiteten Medienpräsentationsbeschreibung und Senden der Medienpräsentationsbeschreibung, die der Verschlüsselung unterzogen wurde, an einen Client, was den Client veranlasst, Streaming-Medieninhalt, der der Medienpräsentationsbeschreibung entspricht, die der Verschlüsselung unterzogen wurde, zu erlangen und abzuspielen.

2. Verfahren nach Anspruch 1, wobei das Empfangen, durch den HTTP-Streamingserver einer von einer Drittparteivorrichtung gesendeten Authentisierungsanfrage, Durchführen der Authentisierung an der Drittparteivorrichtung gemäß der Authentisierungsanfrage und, wenn die Authentisierung erfolgreich ist, Senden einer Authentisierungsantwort, die anzeigt, dass die Authentisierung erfolgreich ist, an die Drittparteivorrichtung die folgenden Schritte umfassen:
Empfangen, durch den HTTP-Streamingserver, der von der Drittparteivorrichtung gesendeten Authentisierungsanfrage, Durchführen von Authentisierung an der Drittparteivorrichtung gemäß der Authentisierungsanfrage, und, falls die Authentisierung erfolgreich ist, Erstellen eines Sicherheitstunnels mit der Drittparteivorrichtung und Senden der Authentisierungsantwort, die anzeigt, dass die Authentisierung erfolgreich ist, an die Drittparteivorrichtung durch den Sicherheitstunnel.

3. Verfahren nach Anspruch 2, wobei das Empfangen, durch den HTTP-Streamingserver, der ersten Kennung und des Inhalts, der der ersten Kennung entspricht, den folgenden Schritt umfasst:
Empfangen, durch den HTTP-Streamingserver, der ersten Kennung und des Inhalts, der der ersten Kennung entspricht, wobei die erste Kennung und der Inhalt durch die Drittparteivorrichtung durch den Sicherheitstunnel gesendet werden.

4. Verfahren nach einem der Ansprüche 1 bis 3, wobei das Durchführen, durch den HTTP-Streamingserver, von Verschlüsselung an der verarbeiteten Medienpräsentationsbeschreibung und das Senden der Medienpräsentationsbeschreibung, die der Verschlüsselung unterzogen wurde, an den Client die folgenden Schritte umfassen:
Verschlüsseln, durch den HTTP-Streamingserver, der verarbeiteten Medienpräsentationsbeschreibung gemäß einem vorkonfigurierten Schlüssel und Senden der verschlüsselten Medienpräsentationsbeschreibung an den Client; oder, Senden, durch den HTTP-Streamingserver, der verarbeiteten Medienpräsentationsbeschreibung an den Client über einen Internetprotokoll-Sicherheitstunnel, der zwischen dem "Hyper Text Transfer Protocol"-Streamingserver und dem Client erstellt wurde.

5. Verfahren zum Verarbeiten von Streaming-Medieninhalt, das die folgenden Schritte umfasst:
Erhalten (201), durch eine Drittparteivorrichtung, einer Anfragenachricht für eine Medienpräsentationsbeschreibung, wobei die Anfragenachricht von einem Client gesendet wird, wobei die Anfragenachricht für die Medienpräsentationsbeschreibung eine erste Kennung umfasst und die erste Kennung eine Kennung der Medienpräsentationsbeschreibung ist;
Senden (202), durch die Drittparteivorrichtung, einer Authentisierungsanfrage an einen "Hyper Text Transfer Protocol"-Streamingserver bzw. HTTP-Streamingserver gemäß der Anfragenachricht für die Medienpräsentationsbeschreibung und Empfangen einer Authentisierungsantwort, die von dem "Hyper Text Transfer Protocol"-Streamingserver zurückgegeben wird; und
Senden (203), durch die Drittparteivorrichtung, wenn die empfangene Authentisierungsantwort eine Antwort ist, die anzeigt, dass die Authentisierung erfolgreich ist, der ersten Kennung und des Inhalts, der der ersten Kennung entspricht, an den HTTP-Streamingserver, was den HTTP-Streamingserver veranlasst, die der ersten Kennung entsprechende Medienpräsentationsbeschreibung gemäß dem Inhalt zu verarbeiten, Verschlüsselung an der verarbeiteten Medienpräsentationsbeschreibung durchzuführen und die Medienpräsentationsbeschreibung, die der Verschlüsselung unterzogen wurde, an den Client zu senden.

6. Verfahren nach Anspruch 5, wobei das Senden, durch die Drittparteivorrichtung, einer Authentisierungsanfrage an den HTTP-Streamingserver gemäß der Anfragenachricht für die Medienpräsentationsbeschreibung und das Empfangen einer Authentisierungsantwort, die von dem HTTP-Streamingserver zurückgegeben wird, die folgenden Schritte umfassen:
Senden, durch die Drittparteivorrichtung, der Authentisierungsanfrage an den HTTP-Streamingserver gemäß der Anfragenachricht für die Medienpräsentationsbeschreibung; und,
wenn die Authentisierung an der Drittparteivorrichtung erfolgreich ist, Erstellen, durch die Drittparteivorrichtung, eines Sicherheitstunnels mit dem HTTP-Streamingserver und Empfangen der Authentisierungsantwort, die anzeigt, dass die Authentisierung erfolgreich ist, durch den Sicherheitstunnel.

7. Verfahren nach Anspruch 6, wobei das Senden, durch die Drittparteivorrichtung, wenn die empfangene Authentisierungsantwort eine Antwort ist, die anzeigt, dass die Authentisierung erfolgreich ist, der ersten Kennung und des Inhalts, der der ersten Kennung entspricht, an den HTTP-Streamingserver den folgenden Schritt umfasst:
wenn die Drittparteivorrichtung die Antwort, die anzeigt, dass die Authentisierung erfolgreich ist, durch den Sicherheitstunnel empfängt, Senden, durch die Drittparteivorrichtung, der ersten Kennung und des Inhalts, der der ersten Kennung entspricht, an den HTTP-Streamingserver durch den Sicherheitstunnel.

8. "Hyper Text Transfer Protocol"-Streamingserver bzw. HTTP-Streamingserver, der Folgendes umfasst:
ein erstes Transceivermodul (31), das ausgelegt ist zum Empfangen einer von einer Drittparteivorrichtung gesendeten Authentisierungsanfrage;
ein erstes Authentisierungsmodul (32), das ausgelegt ist zum Durchführen von Authentisierung an der Drittparteivorrichtung gemäß der von dem ersten Transceivermodul (31) empfangenen Authentisierungsanfrage, wobei das erste Transceivermodul (31) ausgelegt ist zum: wenn die Authentisierung des ersten Authentisierungsmoduls (32) erfolgreich ist, Senden einer Authentisierungsantwort, die anzeigt, dass die Authentisierung erfolgreich ist, an die Drittparteivorrichtung und Empfangen einer ersten Kennung und von Inhalt, der der ersten Kennung entspricht, wobei die erste Kennung eine Kennung einer Medienpräsentationsbeschreibung ist; und
ein erstes Verarbeitungsmodul (33), das ausgelegt ist zum Verarbeiten der Medienpräsentationsbeschreibung, die der ersten Kennung entspricht, gemäß der ersten Kennung und dem Inhalt, der der ersten Kennung entspricht, wobei die erste Kennung und der Inhalt vom ersten Transceivermodul (31) empfangen werden, wobei
das erste Transceivermodul (31) ausgelegt ist zum Durchführen von Verschlüsselung an der von dem ersten Verarbeitungsmodul (33) verarbeiteten Medienpräsentationsbeschreibung und zum Senden der Medienpräsentationsbeschreibung, die der Verschlüsselung unterzogen wurde, an einen Client.

9. HTTP-Streamingserver nach Anspruch 8, der ferner Folgendes umfasst:
ein erstes Sicherheitstunnelerstellungsmodul (34), das ausgelegt ist zum: wenn die Authentisierung des ersten Authentisierungsmoduls (32) erfolgreich ist, Erstellen eines Sicherheitstunnels mit der Drittparteivorrichtung, wobei das erste Transceivermodul (31) insbesondere ausgelegt ist zum Senden einer Authentisierungsantwort, die anzeigt, dass die Authentisierung erfolgreich ist, an die Drittparteivorrichtung durch den von dem ersten Sicherheitstunnelerstellungsmodul (34) erstellten Sicherheitstunnel; und zum Empfangen der ersten Kennung und des Inhalts, der der ersten Kennung entspricht, durch den Sicherheitstunnel.

10. HTTP-Streamingserver nach Anspruch 8 oder 9, wobei das erste Transceivermodul (31) insbesondere ausgelegt ist zum Verschlüsseln der verarbeiteten Medienpräsentationsbeschreibung gemäß einem vorkonfigurierten Schlüssel und zum Senden der verschlüsselten Medienpräsentationsbeschreibung an den Client;
oder,
das erste Transceivermodul (31) insbesondere ausgelegt ist zum Senden der verarbeiteten Medienpräsentationsbeschreibung an den Client durch einen Internetprotokoll-Sicherheitstunnel, der zwischen dem HTTP-Streamingserver und dem Client erstellt wurde.

11. Drittparteivorrichtung, die Folgendes umfasst:
ein Sicherungsmodul (41), das ausgelegt ist zum Sichern von Inhalt, der einer ersten Kennung entspricht; und
ein Transceivermodul (42), das ausgelegt ist zum Erhalten einer von einem Client gesendeten Anfragenachricht für eine Medienpräsentationsbeschreibung, wobei die Anfragenachricht für die Medienpräsentationsbeschreibung die erste Kennung umfasst und die erste Kennung eine Kennung für die Medienpräsentationsbeschreibung ist; zum Senden einer Authentisierungsanfrage an einen "Hyper Text Transfer Protocol"-Streamingserver bzw. HTTP-Streamingserver gemäß der Anfragenachricht für die Medienpräsentationsbeschreibung und zum Empfangen einer Authentisierungsantwort, die von dem HTTP-Streamingserver zurückgegeben wird, und wenn die empfangene Authentisierungsantwort eine Antwort ist, die anzeigt, dass die Authentisierung erfolgreich ist, zum Senden der ersten Kennung und des Inhalts, der von dem Sicherungsmodul (41) gesichert wurde, an den HTTP-Streamingserver, was den HTTP-Streamingserver veranlasst, die der ersten Kennung entsprechende Medienpräsentationsbeschreibung gemäß dem Inhalt zu verarbeiten, Verschlüsselung an der verarbeiteten Medienpräsentationsbeschreibung durchzuführen und die Medienpräsentationsbeschreibung, die der Verschlüsselung unterzogen wurde, an den Client zu senden.

12. Drittparteivorrichtung nach Anspruch 11, die ferner Folgendes umfasst:
ein Sicherheitstunnelerstellungsmodul (42), das ausgelegt ist zum: wenn die Authentisierung an der Drittparteivorrichtung erfolgreich ist, Erstellen eines Sicherheitstunnels mit dem HTTP-Streamingserver, wobei
das Transceivermodul (42) insbesondere ausgelegt ist zum Empfangen einer Authentisierungsantwort, die anzeigt, dass die Authentisierung erfolgreich ist, durch den von dem Sicherheitstunnelerstellungsmodul (42) erstellten Sicherheitstunnel und zum Senden der ersten Kennung und des Inhalts, der der ersten Kennung entspricht, an den HTTP-Streamingserver durch den Sicherheitstunnel.

## Revendications

1. Procédé permettant de traiter un contenu multimédia en temps réel, comprenant les étapes consistant à :
recevoir (101), par un serveur de diffusion en continu de protocole de transfert hypertexte, HTTP, une demande d'authentification envoyée par un dispositif tiers, exécuter l'authentification sur le dispositif tiers en fonction de la demande d'authentification, et si l'authentification est réussie, envoyer une réponse d'authentification indiquant que l'authentification est réussie au dispositif tiers ;
recevoir (102), par le serveur de diffusion en continu HTTP, à partir du dispositif tiers, un premier identifiant et un contenu qui correspond au premier identifiant, et traiter la description de présentation multimédia correspondant au premier identifiant en fonction du contenu, dans lequel le premier identifiant est un identifiant d'une description de présentation multimédia ; et
exécuter (103), par le serveur de diffusion en continu HTTP, un chiffrement sur la description de présentation multimédia traitée, et envoyer la description de présentation multimédia qui a subi le chiffrement à un client, amenant le client à obtenir et à lire un contenu multimédia en temps réel correspondant à la description de présentation multimédia qui a subi le chiffrement.

2. Procédé selon la revendication 1, dans lequel la réception, par le serveur de diffusion en continu HTTP, d'une demande d'authentification envoyée par un dispositif tiers, l'exécution d'une authentification sur le dispositif tiers en fonction de la demande d'authentification, et si l'authentification est réussie, l'envoi d'une réponse d'authentification indiquant que l'authentification est réussie au dispositif tiers, comprennent :
la réception, par le serveur de diffusion en continu HTTP, de la demande d'authentification envoyée par le dispositif tiers, l'exécution de l'authentification sur le dispositif tiers en fonction de la demande d'authentification, et si l'authentification est réussie, l'établissement d'un tunnel de sécurité avec le dispositif tiers, et l'envoi d'une réponse d'authentification indiquant que l'authentification est réussie au dispositif tiers à travers le tunnel de sécurité.

3. Procédé selon la revendication 2, dans lequel la réception, par le serveur de diffusion en continu HTTP, du premier identifiant et du contenu qui correspond au premier identifiant, comprend :
la réception, par le serveur de diffusion en continu HTTP, du premier identifiant et du contenu qui correspond au premier identifiant, dans lequel le premier identifiant et le contenu sont envoyés par le dispositif tiers à travers le tunnel de sécurité.

4. Procédé selon l'une quelconque des revendications 1 à 3, dans lequel l'exécution, par le serveur de diffusion en continu HTTP, d'un chiffrement sur la description de présentation multimédia traitée, et l'envoi de la description de présentation multimédia qui a subi le chiffrement au client, comprennent les étapes consistant à :
chiffrer, par le serveur de diffusion en continu HTTP, la description de présentation multimédia traitée en fonction d'une clé préconfigurée, et envoyer la description de présentation multimédia chiffrée au client ; ou
envoyer, par le serveur de diffusion en continu HTTP, la description de présentation multimédia traitée au client à travers un tunnel de sécurité de protocole Internet établi entre le serveur de diffusion en continu du protocole de transfert hypertexte et le client.

5. Procédé de traitement d'un contenu multimédia en temps réel, comprenant les étapes consistant à :
obtenir (201), par un dispositif tiers, un message de demande d'une description de présentation multimédia, dans lequel le message de demande est envoyé par un client, dans lequel le message de demande de la description de présentation multimédia comprend un premier identifiant, et le premier identifiant est un identifiant de la description de présentation multimédia ;
envoyer (202), par le dispositif tiers, une demande d'authentification à un serveur de diffusion en continu de protocole de transfert hypertexte, HTTP, en fonction du message de demande de la description de présentation multimédia, et recevoir une réponse d'authentification retournée par le serveur de diffusion en continu de protocole de transfert hypertexte ; et
envoyer (203), par le dispositif tiers, si la réponse d'authentification reçue est une réponse indiquant que l'authentification est réussie, le premier identifiant et le contenu qui correspond au premier identifiant au serveur de diffusion en continu HTTP, amenant le serveur de diffusion en continu HTTP à traiter la description de présentation multimédia correspondant au premier identifiant en fonction du contenu, à exécuter un chiffrement de la description de présentation multimédia traitée, et à envoyer la description de présentation multimédia qui a subi le chiffrement au client.

6. Procédé selon la revendication 5, dans lequel l'envoi, par le dispositif tiers, d'une demande d'authentification au serveur de diffusion en continu HTTP en fonction du message de demande de la description de présentation multimédia, et la réception d'une réponse d'authentification retournée par le serveur de diffusion en continu HTTP comprend les étapes consistant à :
envoyer, par le dispositif tiers, la demande d'authentification au serveur de diffusion en continu HTTP en fonction du message de demande de la description de présentation multimédia ; et
si l'authentification sur le dispositif tiers est réussie, établir, par le dispositif tiers, un tunnel de sécurité avec le serveur de diffusion en continu HTTP,
et recevoir la réponse d'authentification indiquant que l'authentification est réussie à travers le tunnel de sécurité.

7. Procédé selon la revendication 6, dans lequel l'envoi, par le dispositif tiers, si la réponse d'authentification reçue est une réponse indiquant que l'authentification est réussie, du premier identifiant et du contenu qui correspond au premier identifiant au serveur de diffusion en continu HTTP, comprend :
si le dispositif tiers reçoit la réponse indiquant que l'authentification est réussie à travers le tunnel de sécurité, envoyer, par le dispositif tiers, le premier identifiant et le contenu qui correspond au premier identifiant au serveur de diffusion en continu HTTP à travers le tunnel de sécurité.

8. Serveur de diffusion en continu de protocole de transfert hypertexte, HTTP, comprenant :
un premier module d'émetteur-récepteur (31), adapté pour recevoir une demande d'authentification envoyée par un dispositif tiers ;
un premier module d'authentification (32), adapté pour exécuter une authentification sur le dispositif tiers en fonction de la demande d'authentification reçue par le premier module d'émetteur-récepteur (31), dans lequel
le premier module d'émetteur-récepteur (31) est adapté pour: lorsque l'authentification du premier module d'authentification (32) est réussie, envoyer une réponse d'authentification indiquant que l'authentification est réussie au dispositif tiers, et recevoir un premier identifiant et un contenu qui correspond au premier identifiant, dans lequel le premier identifiant est un identifiant d'une description de présentation multimédia ; et
un premier module de traitement (33), adapté pour traiter la description de présentation multimédia correspondant au premier identifiant en fonction du premier identifiant et du contenu qui correspond au premier identifiant, le premier identifiant et le contenu étant reçus par le premier module d'émetteur-récepteur (31), dans lequel le premier module d'émetteur-récepteur (31) est adapté pour exécuter un chiffrement sur la description de présentation multimédia traitée par le premier module de traitement (33), et envoyer la description de présentation multimédia qui a subi le chiffrement à un client.

9. Serveur de diffusion en continu HTTP selon la revendication 8, comprenant en outre :
un premier module d'établissement de tunnel de sécurité (34), adapté pour : si l'authentification du premier module d'authentification (32) est réussie, établir un tunnel de sécurité avec le dispositif tiers, dans lequel
le premier module d'émetteur-récepteur (31) est adapté spécifiquement pour envoyer une réponse d'authentification indiquant que l'authentification est réussie au dispositif tiers à travers le tunnel de sécurité établi par le premier module d'établissement de tunnel de sécurité (34) ; et recevoir le premier identifiant et le contenu qui correspond au premier identifiant à travers le tunnel de sécurité.

10. Serveur de diffusion en continu HTTP selon la revendication 8 ou 9, dans lequel le premier module d'émetteur-récepteur (31) est adapté spécifiquement pour chiffrer la description de présentation multimédia en fonction d'une clé préconfigurée, et envoyer la description de présentation multimédia chiffrée au client ; ou
le premier module d'émetteur-récepteur (31) est adapté spécifiquement pour envoyer la description de présentation multimédia traitée au client à travers le tunnel de sécurité de protocole Internet établi entre le serveur de diffusion en continu HTTP et le client.

11. Dispositif tiers, comprenant :
un module de sauvegarde (41), adapté pour sauvegarder un contenu qui correspond à un premier identifiant ; et
un module d'émetteur-récepteur (42), adapté pour obtenir un message de demande d'une description de présentation multimédia qui est envoyée par un client, dans lequel le message de demande de la description de présentation multimédia comprend le premier identifiant et le premier identifiant est un identifiant de la description de présentation multimédia ; envoyer une demande d'authentification à un serveur de diffusion en continu de protocole de transfert hypertexte, HTTP, en fonction du message de demande de la description de présentation multimédia, et recevoir une réponse d'authentification retournée par le serveur de diffusion en continu HTTP ;
et si la réponse d'authentification reçue est une réponse indiquant que l'authentification est réussie, envoyer le premier identifiant et le contenu sauvegardés par le module de sauvegarde (41) au serveur de diffusion en continu HTTP, amenant le serveur de diffusion en continu HTTP à traiter la description de présentation multimédia correspondant au premier identifiant en fonction du contenu, à exécuter un chiffrement sur la description de présentation multimédia traitée, et à envoyer la description de présentation multimédia qui a subi le chiffrement au client.

12. Dispositif tiers selon la revendication 11, comprenant en outre :
un module d'établissement de tunnel de sécurité (42), adapté pour : si l'authentification sur le dispositif tiers est réussie, établir un tunnel de sécurité avec le serveur de diffusion en continu HTTP, dans lequel
le module d'émetteur-récepteur (42) est adapté spécifiquement pour recevoir une réponse d'authentification indiquant que l'authentification est réussie à travers le tunnel de sécurité établi par le module d'établissement de tunnel de sécurité (42), et envoyer le premier identifiant et le contenu qui correspond au premier identifiant au serveur de diffusion en continu HTTP à travers le tunnel de sécurité.
